# EUROPÄISCHE PATENTSCHRIFT

(11) **EP 1 639 888 B1**
(45) Veröffentlichungstag und Bekanntmachung des Hinweises auf die Patenterteilung: **11.11.2009**
(21) Anmeldenummer: 05108643.7
(22) Anmeldetag: 20.09.2005
(51) Int. Cl.: A01J 5/04

(54) **Melkanlage**
Milking installation
Installation de traite

(30) Priorität: 27.09.2004 CH 15762004
(43) Veröffentlichungstag der Anmeldung: 29.03.2006
(73) Patentinhaber: Gisler, Josef, 6330 Cham (CH)
(72) Erfinder: Gisler, Josef, 6330 Cham (CH)
(74) Vertreter: Falk, Urs

(56) Entgegenhaltungen:
- EP-A- 1 369 033
- WO-A-02/098211
- DE-A1- 19 812 573

## Beschreibung

Die Erfindung betrifft eine Melkanlage der im Oberbegriff des Anspruchs 1 genannten Art.

Eine Melkanlage zum Melken von Kühen enthält mehrere Melkplätze. Jeder Melkplatz umfasst ein Melkzeug mit vier Zitzenbechern, das über einen Milchschlauch mit einer Melkleitung verbunden ist. Jedem Melkzeug ist ein Pulsator zugeordnet, der über einen oder zwei Pulsschläuche mit den vier Zitzenbechern des Melkzeugs verbunden ist. Die Melkanlage umfasst weiter eine Vakuumpumpe zum Erzeugen von Vakuum, einen Vakuumausgleichstank, ein Vakuumregelventil, eine Vakuumleitung und einen Milchsammelbehälter. Das Vakuumregelventil dient dazu, das im Vakuumausgleichstank zu erzielende Vakuumniveau zu regeln. Die Pulsatoren sind an die Vakuumleitung angeschlossen und verbinden den Pulsschlauch abwechslungsweise mit der Vakuumleitung oder mit der Umgebungsluft, so dass im Pulsschlauch entweder Unterdruck (Vakuum) oder Atmosphärendruck herrscht. Die Melkleitung ist ebenfalls mit dem Vakuumausgleichstank verbunden, so dass in der Melkleitung der gleiche Unterdruck herrscht wie jeweils im Pulsschlauch.

Der Pulsator ist ein Ventil mit zwei Eingängen und einem oder zwei Ausgängen. Der Pulsschlauch bzw. die Pulsschläuche sind mit dem Ausgang bzw. den Ausgängen des Pulsators verbunden. Der erste Eingang des Pulsators ist mit der Vakuumleitung, der zweite Eingang mit der Umgebungluft verbunden. Wenn der Pulsator jeweils den Pulsschlauch mit dem Vakuum führenden Eingang verbindet, dann wird die im Pulsschlauch vorhandene Luft abgesogen und in die Vakuumleitung befördert. Die von den Pulsatoren zugeführten Luftpulse bewirken Fluktuationen des Vakuumniveaus in der Vakuumleitung und auch im Vakuumausgleichstank. Diese Fluktuationen schlagen auf das Vakuumregelventil durch und können sich noch verstärken. Die tiefsten Fluktuationen von bekannten Melkanlagen liegen im Bereich von etwa 0.4kPa. Die Pulsatoren erzeugen im Betrieb zudem mechanische Erschütterungen, die Lärm und Vibrationen erzeugen. Auch die ins Vakuumregelventil einströmende Luft ist eine Lärmquelle. Zur Verminderung des von der Vakuumpumpe und dem Vakuumregelventil erzeugten Lärms hat sich eine Anordnung bewährt, bei der die Vakuumpumpe, das Vakuumregelventil, ein Dämpfungselement und der Vakuumausgleichstank in dieser Reihenfolge hintereinander angeordnet sind. Die Vakuumpumpe, das Vakuumregelventil und das Dämpfungssystem befinden sich dabei bevorzugt in einem vom Melkraum getrennten Raum oder im Freien.

Aus der WO 02/098211 sind verschiedene Massnahmen bekannt, um die Schallemissionen in einer Melkanlage zu reduzieren, insbesondere die Anordnung von mehreren Trennelementen zwischen der von einem Sicherheitsabscheider kommenden Leitung und dem Vakuumausgleichstank, oder die Verwendung eines Diffusors. Als weitere Massnahme wird vorgeschlagen, die Luftleitung durch einen Puffertank zu ersetzen, der in unmittelbarer Nähe der Pulsatoren angeordnet ist. Der Puffertank ist so bemessen, dass sein Volumen etwa 30 Liter pro angeschlossenem Pulsator beträgt.

Aus der EP 1369033 ist ein Vakuumsystem für den Anschluss von einzelnen Melkrobotern bekannt. Um unerwünschte Druckschwankungen in der Melkvakuumeinheit des Melkroboters zu verhindern, ist jeder Melkroboter über einen vorgelagerten Puffertank und eine geregelte Drosselklappe mit dem Vakuumsystem verbunden. Die Pulsatoren und ihr Betrieb sind nicht beschrieben.

Der Erfindung liegt die Aufgabe zugrunde, die Fluktuationen des Vakuums in der Melkleitung zu vermindern, die Störung der Pulsatoren untereinander zu verhindern und ein besseres Melkklima für Mensch und Tier zu schaffen.

Die genannte Aufgabe wird erfindungsgemäss gelöst durch die Merkmale des Anspruchs 1.

Die Erfindung gemäß Anspruch 1 betrifft eine Melkanlage mit mehreren, mindestens aber zwei Melkplätzen. Die Melkanlage umfasst mindestens eine Vakuumpumpe, einen Vakuumausgleichstank, eine Vakuumleitung, eine Melkleitung und einen Milchsammelbehälter. Jedem Melkplatz ist ein Pulsator zugeordnet, an den ein Melkzeug angeschlossen ist. Das Melkzeug ist über einen Milchschlauch mit der Melkleitung und über mindestens einen Pulsschlauch mit dem Pulsator verbunden. Erfindungsgemäss ist pro Pulsator ein separater Ausgleichstank vorhanden. Der Pulsator ist mit dem Ausgleichstank und der Ausgleichstank mit der Vakuumleitung verbunden. Der Ausgleichstank dient dazu, die vom Pulsator jeweils in relativ kurzer Zeit abgegebene Luftmenge vorübergehend aufzunehmen und verteilt über einen längeren Zeitraum an die Vakuumleitung abzugeben.

Bei einer Melkanlage, die für den Betrieb der Pulsatoren ausschliesslich im Wechseltaktbetrieb ausgelegt ist, bei dem alternierend jeweils zwei Zitzenbecher eines Melkzeugs vom Pulsator mit Vakuum und zwei Zitzenbecher mit Umgebungsdruck versorgt werden, ist der Ausgleichstank über eine Verbindungsleitung an die Vakuumleitung angeschlossen, deren Querschnittsfläche äquivalent der Querschnittsfläche eines Schlauches oder von zwei Schläuchen mit dem Innendurchmesser von 8 mm ist.

Bei einer Melkanlage, die für den Betrieb der Pulsatoren im Wechseltaktbetrieb und/oder im Simultanbetrieb ausgelegt ist, bei dem alle Zitzenbecher eines Melkzeugs gleichzeitig vom Pulsator mit Vakuum versorgt werden, ist der Ausgleichstank über eine Verbindungsleitung an die Vakuumleitung angeschlossen, deren Querschnittsfläche äquivalent der Querschnittsfläche von zwei Schläuchen mit dem Innendurchmesser von 8 mm ist.

Das Volumen des Ausgleichstanks liegt im Bereich von 15 bis 20 Litern, typischerweise bei 17 Litern.

Die Erfindung wird nachfolgend anhand eines Ausführungsbeispiels und anhand der Zeichnung näher erläutert.

Es zeigen:
- Fig. 1: eine Melkanlage, und
- Fig. 2: ein Diagramm eines Melkzyklus, und
- Fig. 3: einen Ausgleichstank.

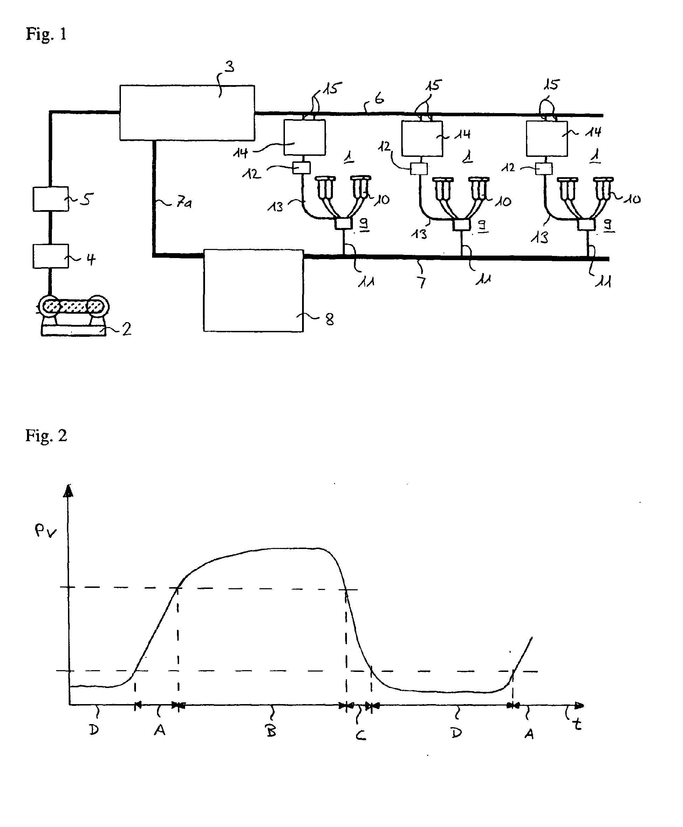

Die Fig. 1 zeigt eine Melkanlage zum Melken von Kühen, die zwei oder mehr Melkplätze 1 aufweist. Die Melkanlage umfasst eine Vakuumpumpe 2 zum Erzeugen von Vakuum, einen Vakuumausgleichstank 3, ein Vakuumregelventil 4, ein Dämpfungselement 5, eine Vakuumleitung 6, eine Melkleitung 7 und einen Milchsammelbehälter 8, sowie weitere für das Verständnis der Erfindung nicht nötige und deshalb nicht dargestellte Elemente. Das Vakuumregelventil 4 dient dazu, das im Vakuumausgleichstank 3 zu erzielende Vakuumniveau zu regeln. Jeder Melkplatz 1 umfasst ein Melkzeug 9 mit vier Zitzenbechern 10, das über einen Milchschlauch 11 mit der Melkleitung 7 verbunden ist. Jedem Melkzeug 9 ist ein Pulsator 12 zugeordnet, der über einen oder zwei Pulsschläuche 13 mit den vier Zitzenbechern 10 des Melkzeugs 9 verbunden ist. Der Milchsammelbehälter 8 ist vakuumsmässig über eine Leitung 7a mit dem Vakuumausgleichstank 3 verbunden. Die Vakuumpumpe 2, das Vakuumregelventil 4, das Dämpfungselement 5 und der Vakuumausgleichstank 3 sind bevorzugt in dieser Reihenfolge hintereinander angeordnet, um den von der Vakuumpumpe 2 und dem Vakuumregelventil 4 erzeugten Lärm im Melkraum möglichst gering zu halten, wobei sich die Vakuumpumpe 2, das Vakuumregelventil 4 und das Dämpfungselement 5 wenn möglich ausserhalb des Melkraums befinden.

Erfindungsgemäss ist jedem Pulsator 12 ein Ausgleichstank 14 zugeordnet, der zwischen dem Pulsator 12 und der Vakuumleitung 6 eingebaut ist. Der Ausgleichstank 14 ist einerseits über einen Schlauch mit dem Pulsator 12 und über eine Verbindungsleitung 15 mit der Vakuumleitung 6 verbunden. Im Beispiel besteht die Verbindungsleitung 15 aus zwei kurzen Schläuchen von 8 mm Innendurchmesser. Das Volumen des Ausgleichstanks 14 beträgt etwa 15 bis 20 Liter, wobei sich bei Experimenten ein Wert von 17 Litern bewährt hat: Die Fluktuationen des Vakuums im Vakuumausgleichstank 3 konnten bei einer Melkanlage mit acht Melkplätzen auf einen kaum mehr messbaren Wert von weniger als 0.05 kPa gesenkt werden.

Die Pulsatoren 12 können in zwei unterschiedlichen Betriebsarten arbeiten. Die erste Betriebsart ist bekannt als Wechseltaktbetrieb, bei dem jeweils zwei und zwei Zitzenbecher 10 alternierend mit Vakuum bzw. Umgebungsdruck beaufschlagt werden. Die zweite Betriebsart ist bekannt als Simultanbetrieb, bei dem alle vier Zitzenbecher 10 gleichzeitig mit Vakuum bzw. Umgebungsdruck beaufschlagt werden. Wenn die Pulsatoren 12 ausschliesslich im Wechseltaktbetrieb betrieben werden, dann genügt ein einziger Schlauch von 8 mm Innendurchmesser, um den Ausgleichstank 14 mit der Vakuumleitung 6 zu verbinden. Wenn die Pulsatoren 12 nur im Simultanbetrieb oder in beiden Betriebsarten betrieben werden, dann sind zwei Schläuche von 8 mm Innendurchmesser erforderlich, um den Ausgleichstank 14 mit der Vakuumleitung 6 zu verbinden. An die Verbindung zwischen dem Ausgleichstank 14 und der Vakuumleitung 6 werden zwei gegenläufige Anforderungen gestellt. Einerseits soll der Querschnitt der Verbindungsleitung 15 möglichst gross sein, damit das im Ausgleichstank 14 herrschende Vakuum immer dann, wenn der Pulsschlauch des Pulsators 12 mit Vakuum versorgt werden muss, das im Vakuumausgleichstank 3 herrschende Vakuumniveau aufweist. Andererseits soll der Querschnitt der Verbindungsleitung 15 möglichst klein sein, damit die jeweils aus dem Pulsschlauch abgesogene Luft verteilt über die zur Verfügung stehende Zeit an die Vakuumleitung 6 abgegeben wird.

Die Fig. 2 zeigt ein Diagramm eines Melkzyklus, der in vier Phasen unterteilt ist, die in der Fachwelt als A, B, C und D Phase bekannt sind. Das Diagramm zeigt den zeitlichen Verlauf des Niveaus des Vakuums, das vom Pulsschlauch 13 in den Pulsraum im Zitzenbecher 10 angelegt wird. Während der Phase A wird das Vakuum aufgebaut, bis es so gross ist, dass der Milchfluss einsetzt. Die Phase B beginnt mit dem Einsetzen des Milchflusses und endet, wenn der Milchfluss aufhört. Während der Phase C wird das Vakuum wieder abgebaut und während der Phase D liegt der Umgebungsdruck via Zitzengummi am Zitzen an. Das Volumen des Ausgleichstanks 14 und der Querschnitt der Verbindungsleitung 15 sind so zu wählen, dass die Phase B, während der die Milch fliesst, unverändert bleibt. Wie bereits erwähnt, beträgt das Volumen des Ausgleichstanks 14 vorzugsweise 15 bis 20 Liter, typischerweise 17 Liter, und die Querschnittsfläche der Verbindungsleitung 15 entspricht vorzugsweise der Querschnittsfläche von einem bzw. zwei Schläuchen mit einem Innendurchmesser von 8 mm.

Die Erfindung bietet mehrere Vorteile:
- Im Betrieb gibt jeder Pulsator der Melkanlage entsprechend der Arbeitsfrequenz der Pulsatoren laufend Luftpulse an das Vakuumssystem ab. Während bei herkömmlichen Melkanlagen die Luftpulse der einzelnen Pulsatoren direkt und unmittelbar an die Vakuumleitung abgegeben werden und sich die Luftmengen der Luftpulse verschiedener Pulsatoren somit addieren und einen störenden Luftpuls erzeugen können, erfolgt bei der Erfindung die Abgabe des Luftpulses an die Vakuumleitung nicht unmittelbar, sondern verteilt über einen vorbestimmten Zeitraum. In der Vakuumleitung entsteht somit ein annähernd gleichförmiger Luftstrom bzw. ein Luftstrom mit geringen Schwankungen, der zum Vakuumausgleichstank fliesst und über die Vakuumpumpe abgeführt wird. Das Vakuumregelventil kann nicht mehr durch einen Luftstoss angeregt werden und bleibt ruhig. Die Schwankungen des Luftstroms sind so gering, dass die Fluktuationen des Vakuums in der Vakuumleitung 6 und im Vakuumausgleichstank 3 praktisch nicht mehr messbar sind, d.h. unter 0.05 kPa liegen.
- Die Ausgleichstanke können unabhängig voneinander und entsprechend den Gegebenheiten im Melkraum nahe beim Euter der zu melkenden Kuh montiert werden. Nahe bedeutet, dass die Länge des Pulsschlauches typischerweise nur noch etwa 50 cm beträgt. Damit reduziert sich auch die aus dem Pulsschlauch jeweils zu evakuierende Luft auf ein Minimum.
- Die Ausgleichstanke können an eine bestehende, konventionelle Vakuumleitung angeschlossen werden. An die Vakuumleitung werden keine besonderen Anforderungen gestellt. Insbesondere sind keine schalldämpfenden Massnahmen zu treffen, d.h. die aus gewöhnlichen Rohren bestehende Vakuumleitung kann direkt mit dem Vakuumausgleichstank verbunden werden.
- Die Anzahl der Melkplätze kann problemlos vergrössert werden.

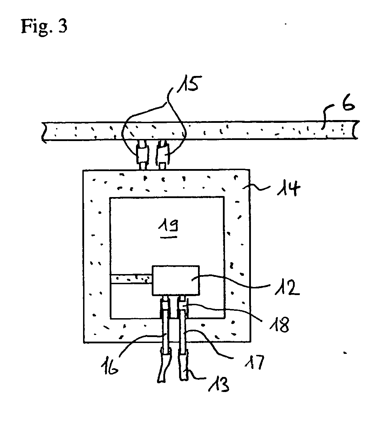

Die Fig. 3 zeigt ein Ausführungsbeispiel, bei dem der Pulsator 12 am zugehörigen Ausgleichstank 14 montiert ist. Der Ausgleichstank 14 ist in diesem Beispiel als rahmenförmiger Tank konstruiert. Um eine Übertragung der mechanischen Erschütterungen des Pulsators 12 auf die Melkanlage zu vermeiden, sind am Ausgleichstank 14 mit Vorteil zwei Stutzen 16 und 17 befestigt, an deren einem Ende einerseits einer der beiden Pulsschläuche 13 und an deren anderem Ende ein kurzer Verbindungsschlauch 18 aus einem elastischem Material wie Gummi oder Kunststoff aufgesteckt ist, wobei die Ausgänge des Pulsators 12 auf die beiden Verbindungsschläuche 18 aufgesteckt sind. Die beiden Verbindungsschläuche 18 dämpfen wirksam die vom Pulsator 12 ausgelösten mechanischen Schläge. Der Ausgleichstank 14 bildet bevorzugt einen rechteckförmigen Rahmen, der zudem auf der Rückseite mit einer Platte abgedeckt und auf der Vorderseite mit einem beweglichen Deckel versehen ist, so dass im Inneren ein Hohlraum 19 gebildet ist. In diesem Hohlraum 19 sind die Mechanik für das Anheben und Absenken des Melkzeugs 9 sowie alle nötigen Vorrichtungen für eine moderne Datenübertragung zwischen Melkplatz und PC (Herdenmanagement) untergebracht.

## Patentansprüche

1. Melkanlage mit mindestens zwei Melkplätzen (1), mit einem Vakuumausgleichstank (3), an den eine Vakuumleitung (6) angeschlossen ist, und einem Milchsammelbehälter (8), an den eine Melkleitung (7) angeschlossen ist, wobei jedem Melkplatz (1) ein Pulsator (12) zugeordnet ist, an den ein Melkzeug (9) angeschlossen ist, wobei jedes Melkzeug (9) über einen Milchschlauch (11) mit der Melkleitung (7) und über mindestens einen Pulsschlauch (13) mit dem Pulsator (12) verbunden ist, **dadurch gekennzeichnet, dass** pro Pulsator (12) ein separater Ausgleichstank (14) vorhanden ist und dass der Pulsator (12) direkt mit dem separaten Ausgleichstank (14) und der separate Ausgleichstank (14) direkt mit der Vakuumleitung (6) verbunden ist.

2. Melkanlage nach Anspruch 1, **dadurch gekennzeichnet, dass** sie für den Betrieb der Pulsatoren (12) ausschliesslich im Wechseltaktbetrieb ausgelegt ist, bei dem alternierend jeweils zwei Zitzenbecher (10) des Melkzeugs (9) vom Pulsator (12) mit Vakuum und zwei Zitzenbecher (10) mit Umgebungsdruck versorgt werden, wobei der Ausgleichstank (14) über eine Verbindungsleitung (15) an die Vakuumleitung (6) angeschlossen ist, deren Querschnittsfläche gleich der oder grösser als die Querschnittsfläche eines Schlauches mit dem Innendurchmesser von 8 mm ist und deren Querschnittsfläche kleiner als oder gleich der Querschnittsfläche von zwei Schläuchen mit dem Innendurchmesser von 8 mm ist.

3. Melkanlage nach Anspruch 1, **dadurch gekennzeichnet, dass** sie für den Betrieb der Pulsatoren (12) im Wechseltaktbetrieb, bei dem alternierend jeweils zwei Zitzenbecher (10) des Melkzeugs (9) vom Pulsator (12) mit Vakuum und zwei Zitzenbecher (10) mit Umgebungsdruck versorgt werden, und/oder im Simultanbetrieb ausgelegt ist, bei dem alle Zitzenbecher (10) eines Melkzeugs (9) gleichzeitig vom Pulsator (12) mit Vakuum bzw. Umgebungsdruck versorgt werden, wobei der Ausgleichstank (14) über eine Verbindungsleitung (15) an die Vakuumleitung (6) angeschlossen ist, deren Querschnittsfläche äquivalent der Querschnittsfläche von zwei Schläuchen mit dem Innendurchmesser von 8 mm ist.

4. Melkanlage nach einem der Ansprüche 1 bis 3, **dadurch gekennzeichnet, dass** das Volumen des Ausgleichstanks (14) im Bereich von 15 bis 20 Litern liegt.

## Claims

1. Milking installation, comprising at least two milking places (1), a vacuum compensation tank (3) to which a vacuum line (6) is connected, and a milk collecting container (8) to which a milking line (7) is connected, with each milking place (1) being associated with a pulsator (12) to which a teat cup cluster (9) is connected, with each teat cup cluster (9) being connected via a milk tube (11) with the milking line (7) and via at least one pulse tube (13) with the pulsator (12), **characterized in that** a separate compensation tank (14) is provided for each pulsator (12) and the pulsator (12) is connected directly with the separate compensation tank (14) and the separate compensation tank (14) directly with the vacuum line (6).

2. Milking installation according to claim 1, **characterized in that** it is configured exclusively for operation in alternating cycle for the operation of the pulsators (12), in which two teat cups (10) each of the teat cup cluster (9) are supplied in an alternating manner by the pulsator (12) with vacuum and two teat cups (10) with ambient pressure, with the compensation tank (14) being connected via a connection line (15) to the vacuum line (6) whose cross-sectional surface area is equal to or larger than the cross-sectional surface area of a tube with the inside diameter of 8 mm and whose cross-sectional surface area is smaller than or equal to the cross-sectional surface area of two tubes with the inside diameter of 8 mm.

3. Milking installation according to claim 1, **characterized in that** it is configured for operation in alternating cycle for the operation of the pulsators (12), in which two teat cups (10) each of the teat cup cluster (9) are supplied in an alternating manner by the pulsator (12) with vacuum and two teat cups (10) with ambient pressure, and/or in simultaneous operation in which all teat cups (10) of a teat cup cluster (9) are supplied simultaneously by the pulsator (12) with vacuum or ambient pressure, with the compensation tank (14) being connected via a connection line (15) to the vacuum line (6) whose cross-sectional surface area is equivalent to the cross-sectional surface area of two tubes with the inside diameter of 8 mm.

4. Milking installation according to any of claims 1 to 3, **characterized in that** the volume of the compensation tank (14) lies in the range of 15 to 20 liters.

## Revendications

1. Installation de traite, comprenant au moins deux emplacements de traite (1), un réservoir de compensation du vide (3) auquel est raccordée une conduite de vide (6), et un réservoir de recueil du lait (8) auquel est raccordée une conduite de traite (7), dans laquelle un pulsateur (12) est attribué à chaque emplacement de traite (1) auquel est raccordé un outillage de traite (9), dans laquelle chaque outillage de traite (9) est relié à la conduite de traite (7) par l'intermédiaire d'un tuyau flexible pour le lait (11) et au pulsateur (12) par l'intermédiaire d'au moins un tuyau de pulsations (13), **caractérisée en ce que**, pour chaque pulsateur (12), un réservoir de compensation séparé (14) est présent et **en ce que** le pulsateur (12) est relié directement au réservoir de compensation séparé (14) et **en ce que** le réservoir de compensation séparé (14) est relié directement à la conduite de vide (6).

2. Installation de traite selon la revendication 1, **caractérisée en ce qu'**elle est conçue pour le fonctionnement des pulsateurs (12) exclusivement dans le mode à cycle alterné, pendant lequel deux gobelets à mamelle (10) de l'outillage de traite (9) sont alimentés respectivement en alternance par le pulsateur (12) en vide et pendant lequel deux gobelets à mamelle (10) sont alimentés en alternance en pression ambiante, dans laquelle le réservoir de compensation (14) est relié à la conduite de vide (6) par l'intermédiaire d'une conduite de liaison (15) dont la superficie de section transversale est égale ou supérieure à la superficie de section transversale d'un tuyau flexible dont le diamètre intérieur est de 8 mm et dont la superficie de section transversale est inférieure ou égale à la superficie de section transversale de deux tuyaux flexibles dont le diamètre intérieur est de 8 mm.

3. Installation de traite selon la revendication 1, **caractérisée en ce qu'**elle est conçue pour le fonctionnement des pulsateurs (12) dans le mode à cycle alterné, pendant lequel deux gobelets à mamelle (10) de l'outillage de traite (9) sont alimentés respectivement en alternance par le pulsateur (12) en vide et pendant lequel deux gobelets à mamelle (10) sont alimentés en alternance en pression ambiante, et/ou **en ce qu'**elle est conçue dans le mode simultané, pendant lequel tous les gobelets à mamelle (10) d'un outillage de traite (9) sont alimentés simultanément par le pulsateur (12) en vide ou en pression ambiante, dans laquelle le réservoir de compensation (14) est relié à la conduite de vide (6) par l'intermédiaire d'une conduite de liaison (15) dont la superficie de section transversale est équivalente à la superficie de section transversale de deux tuyaux flexibles dont le diamètre intérieur est de 8 mm.

4. Installation de traite selon l'une des revendications 1 à 3, **caractérisée en ce que** le volume du réservoir de compensation (14) se trouve dans la plage de 15 à 20 litres.
